# FASCICULE DE BREVET EUROPEEN

(11) **EP 1 303 953 B1**
(45) Date de publication et mention de la délivrance du brevet: **23.02.2005**
(21) Numéro de dépôt: 01956631.4
(22) Date de dépôt: 23.07.2001
(51) Int. Cl.: H04L 12/56, H04Q 11/04

(54) **DISPOSITIF DE CONTROLE D'ACCES ENTRE DES RESEAUX ATM**
ZUGANGSKONTROLLEINRICHTUNG ZWISCHEN ATM-NETZEN
DEVICE FOR CONTROLLING ACCESS BETWEEN ATM NETWORKS

(30) Priorité: 25.07.2000 FR 0009723
(43) Date de publication de la demande: 23.04.2003
(73) Titulaire: FRANCE TELECOM, 75015 Paris (FR); Groupe des Ecoles des Telecommunications, 75634 Paris Cedex 13 (FR)
(72) Inventeur: SIMON, Jean-Louis, F-22300 Lannion (FR); ROLIN, Pierre, F-91120 Palaiseau (FR); PAUL, Olivier, F-35000 Rennes (FR); LAURENT MAKNAVICIUS, Maryline, F-91080 Courcouronnes (FR); GOMBAULT, Sylvain, F-35000 Rennes (FR)
(74) Mandataire: Loisel, Bertrand
(86) Numéro de dépôt international: PCT/FR2001/002394
(87) Numéro de publication internationale: WO 2002/009367

(56) Documents cités:
- JUN XU ET AL: "Design and evaluation of a high-performance ATM firewall switch and its applications" IEEE JOURNAL ON SELECTED AREAS IN COMMUNICATIONS, JUNE 1999, IEEE, USA, vol. 17, no. 6, pages 1190-1200, XP002163130 ISSN: 0733-8716
- LAURENT M ET AL: "SECURING COMMUNICATIONS OVER ATM NETWORKS: THE REMOTE ATM PRIVATE NETWORKS INTERCONNECTION EXAMPLE" ANNALES DES TELECOMMUNICATIONS - ANNALS OF TELECOMMUNICATIONS,CH,PRE SSES POLYTECHNIQUES ET UNIVERSITAIRES ROMANDES, LAUSANNE, vol. 53, no. 9/10, 1 septembre 1998 (1998-09-01), pages 377-388, XP000791620 ISSN: 0003-4347
- PAUL O ET AL: "An asynchronous distributed access control architecture for IP over ATM networks" PROCEEDINGS 15TH ANNUAL COMPUTER SECURITY APPLICATIONS CONFERENCE (ACSAC'99), PROCEEDINGS OF 15TH ANNUAL COMPUTER SECURITY APPLICATIONS CONFERENCE, PHOENIX, AZ, USA, 6-10 DEC. 1999, pages 75-83, XP002163131 1999, Los Alamitos, CA, USA, IEEE Comput. Soc, USA ISBN: 0-7695-0346-2

## Description

La présente invention concerne les techniques de contrôle d'accès dans les réseaux ATM (« Asynchronous Transfer Mode »).

La technologie ATM a été spécifiée pour assurer le transport de flux de natures diverses ayant des exigences variées en termes de qualité de service (QoS, « Quality of Service »). Les communications sont orientées connexion, celles-ci étant établies, contrôlées et fermées au moyen d'un protocole de signalisation.

L'invention vise à fournir un outil de contrôle d'accès pour les réseaux basés sur la technologie ATM, c'est-à-dire aussi bien des réseaux utilisés par des applications natives ATM que par des réseaux de paquets (par exemple IP ou X25) pour lesquels la technologie ATM est utilisée de manière transparente.

La qualité du contrôle d'accès effectué dans les réseaux est fonction de la quantité d'information qu'il est possible de récupérer afin de caractériser les actions des utilisateurs. Un autre point important est la capacité de l'outil de contrôle d'accès à respecter les engagements en matière de qualité de service pris par le réseau vis-à-vis des utilisateurs. Les processus de contrôle d'accès étant particulièrement consommateurs de ressources, il est nécessaire de faire un compromis sur la quantité d'information que l'on désire récupérer tout en utilisant un processus de récupération et d'analyse des informations aussi performant que possible. Il faut pour cela faire en sorte que le contrôle d'accès s'adapte aux utilisations du réseau ATM, et ce de manière dynamique.

La solution la plus évidente pour réaliser le contrôle d'accès dans les réseaux ATM est d'utiliser un dispositif pare-feu, ou « firewall », entre le réseau à protéger (ci-après appelé réseau interne) et le réseau public non sûr (ci-après appelé réseau externe). Cette solution permet le contrôle d'accès aux niveaux paquet, circuit et application. Dans ce cas, le réseau ATM est considéré comme une couche de niveau 2 dans le modèle OSI permettant l'établissement de connexions point à point. Deux connexions sont établies, l'une entre le firewall et l'équipement interne et l'autre entre le firewall et l'équipement externe. Avec ce type d'outil, le contrôle d'accès au niveau ATM n'est pas possible, et la QoS associée aux connexions ATM n'est pas garantie.

Au niveau IP et au niveau circuit, les paquets IP sont réassemblés à partir des cellules ATM et le contrôle d'accès est réalisé au moyen des informations contenues dans les en-têtes des paquets IP (« Internet Protocol », RFC 760, IETF, janvier 1980), TCP (« Transmission Control Protocol », RFC 793, IETF, septembre 1981) et UDP (« User Datagram Protocol », RFC 768, IETF, août 1980). Les paquets sont filtrés en comparant des champs de l'en-tête, tels que les adresses et les ports source et destination, la direction des paquets et les drapeaux TCP, etc., avec une description des paquets autorisés. Les paquets non autorisés sont détruits alors que les paquets autorisés sont transférés d'un réseau à l'autre. Lorsque la même QoS est négociée de part et d'autre du firewall, la qualité de service de bout en bout peut être affectée de la manière suivante :
- les opérations de réassemblage, de routage et de fragmentation augmentent le délai de transit des cellules (CTD).
- les opérations effectuées sur les informations transmises peuvent augmenter le taux de perte de cellule (CLR).
- le temps passé à réassembler et fragmenter les paquets est proportionnel à leur taille. Celle-ci étant variable, la gigue dans le délai de transfert des cellules (CDVT) peut être modifiée.
- les actions de routage et de filtrage se faisant de manière logicielle, la charge du système peut introduire des modifications dans les débits crête et moyen.

Les actions au niveau application sont filtrées au niveau applicatif par des logiciels appelés proxies. Comme aux niveaux IP et circuit, la QoS est perturbée, mais de manière plus importante car le trafic est examiné au niveau application. De plus, comme le filtrage se fait généralement dans un environnement multitâche, des désynchronisations peuvent se produire entre les flux filtrés.

Un dernier problème introduit par ce type d'architecture est son incapacité à supporter des débits importants. Plusieurs études (voir « ATM Net Management : Missing Pieces », par J. Abusamra, Data Communications, mai 1998, ou « Firewall Shootout Test Final Report », Keylabs, Networld + Interop'98, mai 1998) ont montré que ce type d'architecture ne pouvait fournir pour le moment le service de contrôle d'accès de manière satisfaisante à la vitesse d'un lien OC-3 (155 Mbit/s).

Le service de contrôle d'accès tel qu'il est défini par les spécifications de l'ATM Forum (« ATM Security Specification Version 1.0 », The ATM Forum Technical Committee, février 1999) est une extension du service de contrôle d'accès tel qu'il est considéré dans les systèmes classés A et B de l'Orange Book. Dans cette approche, un niveau de sensibilité est associé aux objets et un niveau d'autorisation est associé aux sujets. Chaque niveau est codé au moyen de deux types de paramètre, d'une part un niveau hiérarchique (par exemple public, confidentiel, secret, très secret, ...) et d'autre part un ensemble de domaines (par exemple gestion, recherche, production, ressources humaines, ...). Un sujet peut accéder à un objet si son niveau hiérarchique est supérieur à celui de l'objet et si au moins un des domaines de l'objet est inclus dans un domaine du sujet.

Dans les spécifications de l'ATM Forum, ces deux niveaux sont codés sous forme d'étiquettes suivant la norme « Standard Security Label for Information Transfer » (Federal Information Processing Standards Publication 188, National Institute of Standards and Technology, septembre 1994). Les étiquettes caractérisant le niveau de sensibilité des données transmises sont échangées avant tout échange de données utilisateur au moyen de la signalisation ATM ou d'un protocole du plan utilisateur. Le contrôle d'accès en lui-même est réalisé par les équipements du réseau qui vérifient que le niveau de sensibilité des données est compatible avec le niveau d'autorisation des liens et des interfaces sur lesquels les données sont transférées.

Le principal avantage de cette solution est son extensibilité car la décision de contrôle d'accès se fait au moment de l'ouverture de connexion et sans interférence avec les données des utilisateurs. Cependant, certains problèmes peuvent être soulignés :
- tous les équipements du réseau sont censés gérer les étiquettes de sécurité. Les équipements actuels ne disposent pas de telles fonctionnalités ;
- une connexion doit être établie pour chaque niveau de sensibilité ;
- le contrôle d'accès tel qu'il est considéré dans les firewalls traditionnels (accès aux équipements, aux services, ...) est laissé volontairement en dehors des spécifications.

Les limitations décrites ci-dessus ont été rapidement identifiées et plusieurs propositions ont été faites afin de fournir le service de contrôle d'accès dans son sens traditionnel dans les réseaux ATM. Ces solutions peuvent se classifier en deux catégories : solutions industrielles et solutions académiques.

Le premier type de solution industrielle (« LightStream 1010 Multiservice ATM Switch Overview », Cisco Corp., 1999) utilise un commutateur ATM classique modifié afin de filtrer les demandes de connexion ATM en fonction des adresses source et destination. Le problème principal de cette approche est que le service de contrôle d'accès n'est pas très puissant compte tenu des paramètres considérés.

La seconde solution industrielle (« Atlas Policy Cache Architecture, White Paper », B. Kowalski, Storagetek Corp., 1997) est également basée sur un commutateur ATM, modifié afin de rendre un service de contrôle d'accès au niveau IP. Au lieu de réassembler les cellules pour examiner les en-têtes des paquets comme dans un firewall traditionnel, cette approche cherche à obtenir ces informations directement dans la première cellule échangée sur une connexion. Cette approche empêche la perturbation de la qualité de service pendant la commutation des cellules. Elle utilise également une mémoire associative CAM (« Content Addressable Memory») afin de rendre les recherches dans la politique de contrôle d'accès plus rapides. Cette solution est la première à prendre en compte les limites du firewall traditionnel. Cependant elle n'est pas exempte de défauts :
- le contrôle d'accès est limité aux niveaux réseau et transport. Les niveaux ATM et application ne sont pas considérés ;
- les paquets IP incluant des options ne sont pas filtrés au niveau transport. En effet les options peuvent repousser les informations concernant UDP et TCP dans une deuxième cellule. Ceci pose un problème de sécurité ;
- l'équipement est difficile à gérer en particulier dans le cas des connexions dynamiques car la configuration des filtres se fait manuellement ;
- les performances de cet équipement ne sont pas très extensibles. En effet une version OC-12 (622 Mbit/s) de ce produit a été annoncée en 1996, mais n'a pas été présentée depuis.

Les deux solutions académiques sont basées sur l'architecture précédente mais introduisent des améliorations afin de combler certaines des lacunes de cette solution.

La première approche (J. McHenry, et al., « An FPGA-Based Coprocessor for ATM Firewalls », Proceedings of IEEE FCCM'97, Avril 1997) utilise un circuit spécialisé de type FPGA associé à un commutateur modifié. Au niveau ATM, le contrôle d'accès à l'établissement des connexions est amélioré en permettant un filtrage basé sur les adresses source et destination. Cette solution permet également le filtrage des informations de routage PNNI (« Private Network to Network Interface »). Aux niveaux IP et transport, le service de contrôle d'accès est similaire à celui de la seconde solution industrielle précitée. Cette solution est la plus complète actuellement implémentée. Cependant elle possède quelques limitations :
- les paquets IP avec options ne sont pas traités ;
- seule une partie des informations fournies par la signalisation est utilisée ;
- il n'y a pas de contrôle d'accès au niveau application.

La seconde solution académique (J. Xu, et al., « Design of a High-Performance ATM Firewall », Rapport technique, The Ohio State University, 1997) est l'architecture la plus complète proposée jusqu'à présent. Une classification du trafic en quatre catégories est effectuée en fonction de la QoS négociée au niveau ATM et du traitement à réaliser sur le flux. Cette classification permet d'assurer que les communications ayant des contraintes de qualité de service ne sont pas perturbées par des traitements complexes, les autres communications étant filtrées et perturbées de la même façon que dans un firewall. En dehors de la classification, cette solution introduit également tout un ensemble d'idées d'implémentation intéressantes afin de réduire les délais engendrés par le contrôle d'accès. Cette approche présente cependant certains inconvénients :
- peu de paramètres sont considérés au niveau ATM ;
- le contrôle d'accès au niveau application n'est pas fourni pour les applications ayant des contraintes de QoS ;
- les communications UDP reposant sur des connexions ATM ayant des contraintes de QoS ne sont pas contrôlées ;
- l'architecture ne permet pas de supprimer les fuites d'information puisqu'un utilisateur peut avec une complicité extérieure déjouer les mécanismes de contrôle d'accès ;
- l'architecture est complexe et on peut se demander quels seraient les débits supportés par une implémentation de cette architecture.

Un but principal de la présente invention est de fournir une autre solution au problème du contrôle d'accès dans les réseaux ATM, qui offre de larges possibilités de contrôle à différents niveaux. Un autre but est de faciliter la gestion de l'outil de contrôle d'accès en permettant notamment d'intégrer différents aspects de la politique de contrôle d'accès aux niveaux ATM, IP et transport. Un autre but encore est d'améliorer le contrôle d'accès au niveau ATM en enrichissant les paramètres de contrôle d'accès pris en considération. Il est également souhaitable de fournir un service rapide de contrôle d'accès au niveau cellule.

L'invention propose ainsi un dispositif de contrôle d'accès entre des réseaux ATM, comprenant des moyens d'analyse de signalisation et des moyens d'analyse de trafic reliés à un commutateur ATM configuré pour faire transiter par les moyens d'analyse de signalisation des messages de signalisation ATM échangés entre des réseaux ATM interne et externe, et pour faire transiter par les moyens d'analyse de trafic des cellules ATM porteuses de trafic échangées entre les réseaux interne et externe dans le cadre de connexions ATM établies au moyen desdits messages de signalisation ATM. Le dispositif comprend en outre des moyens de gestion de contrôle d'accès pour configurer dynamiquement les moyens d'analyse de trafic en fonction d'une politique de contrôle d'accès et d'informations recueillies par les moyens d'analyse de signalisation de façon que les moyens d'analyse de trafic filtrent chaque cellule ATM conformément à la politique de contrôle d'accès.

D'autres particularités et avantages de la présente invention apparaîtront dans la description ci-après d'exemples de réalisation non limitatifs, en référence aux dessins annexés, dans lesquels :
- la figure 1 est un schéma synoptique d'un dispositif de contrôle d'accès selon l'invention ;
- la figure 2 est un diagramme illustrant une configuration d'un commutateur du dispositif de la figure 1 vis-à-vis de messages de signalisation ATM ;
- la figure 3 est un schéma synoptique d'un analyseur de signalisation du dispositif de la figure 1 ;
- la figure 4 est un tableau décrivant des informations traitées par des analyseurs de trafic du dispositif de la figure 1 ;
- la figure 5 est un diagramme illustrant une configuration du commutateur du dispositif de la figure 1 vis-à-vis de cellules ATM de trafic ; et
- la figure 6 est un diagramme illustrant un exemple d'arbre d'analyse auquel se réfère un analyseur de trafic du dispositif de la figure 1.

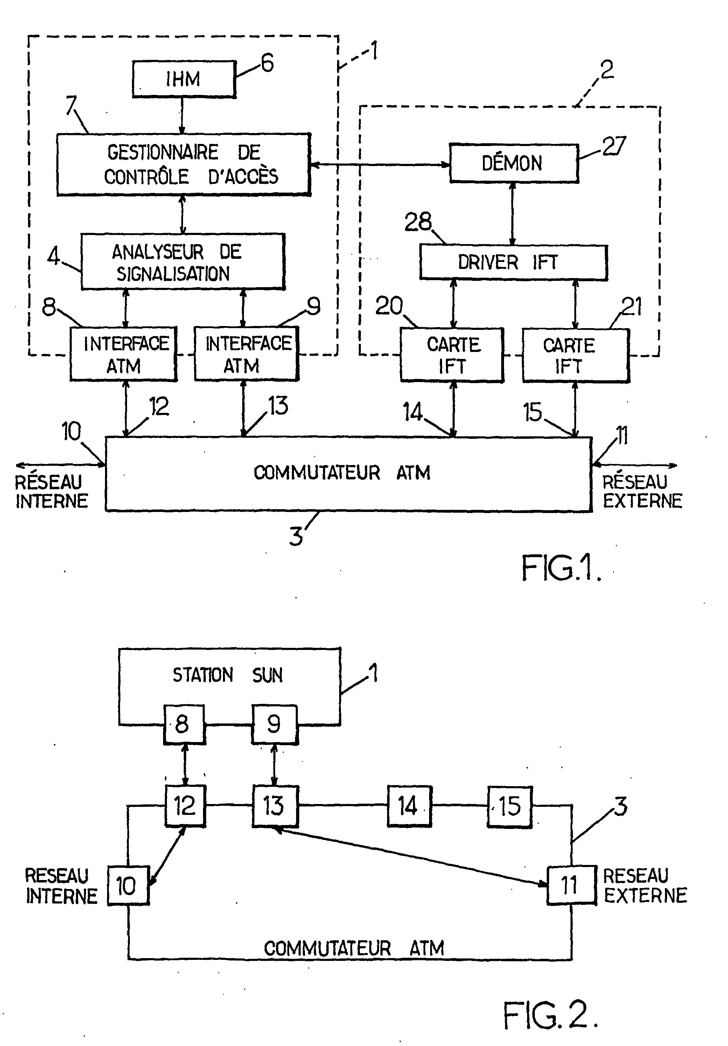

Comme indiqué sur la figure 1, un dispositif de contrôle d'accès selon l'invention peut être composé de deux parties principales 1, 2 coopérant avec un commutateur ATM 3. La première partie 1 est dédiée à la prise en compte d'une politique de contrôle d'accès et à l'analyse de la signalisation ATM. Le résultat de cette analyse est utilisée pour construire dynamiquement une configuration. Celle-ci est utilisée par la seconde partie 2 pour fournir un service de contrôle d'accès basé sur les informations transportées dans les cellules ATM. Cette seconde partie 2 est capable de récupérer les informations de niveau ATM, IP et transport afin de décider si une communication doit être autorisée ou interdite. La configuration de l'ensemble se fait au moyen d'un langage unique.

La partie 1 peut être réalisée au moyen d'une station de travail, telle qu'une station commercialisée par la société Sun Microsystem, Inc. L'analyseur de signalisation 4 est l'élément de cette partie 1 qui effectue les actions de contrôle d'accès au niveau de la signalisation ATM en combinaison avec le gestionnaire de contrôle d'accès 7.

La partie 2 peut être réalisée au moyen d'une station de type PC fonctionnant par exemple avec le système d'exploitation Solaris x86. Cette station est équipée de cartes 20, 21 d'analyse en temps réel des cellules ATM, ci-après appelées cartes IFT (« IP Fast Translator »), qui assurent les actions de contrôle d'accès cellule par cellule.

Afin de permettre l'expression de politiques de contrôle d'accès, on utilise un Langage de Définition de Politique de Contrôle d'Accès (ACPDL, « Access Control Policy Description Language »). La définition de l'ACPDL est basée sur le Langage de Description de Politique (PDL) en cours de définition au sein du groupe de travail travaillant sur les politiques à l'IETF (voir J. Strassner, et al., « Policy Framework Definition Language », draft-ietf-policy-framework-pfdl-00.txt, Internet Engineering Task Force, 17 novembre 1998). Dans ce langage, une politique est définie par un ensemble de règles, chaque règle étant elle même constituée d'un ensemble de conditions et d'une action qui est exécutée lorsque l'ensemble des conditions est rempli. L'expression suivante (exprimée dans le formalisme Backus Naur, BNF) décrit la forme générale d'une règle :
Rule ::= IF <Conditions> THEN <Action>

Toutes les conditions ont la même structure générique exprimée ci-dessous au moyen du formalisme BNF:
Condition ::= <ACCESS CONTROL PARAMETER> <RELATIONAL OPERATOR> <VALUE>

En fonction du niveau dans la pile de protocole, plusieurs types de paramètres de contrôle d'accès peuvent être utilisés :
- au niveau ATM, les paramètres intéressants sont décrits dans l'article de O. Paul, et al., « Manageable parameters to improve access control in ATM networks », HP-OVUA Workshop, Rennes, France, avril 1998. Parmi ceux-ci, on peut choisir le type de trafic, les identificateurs de connexion, les informations d'adressage, les descripteurs de QoS et les descripteurs de service ;
- au niveau transport, la plupart des paramètres considérés sont ceux qui sont utilisés habituellement afin de réaliser le filtrage des paquets dans les routeurs filtrants (par exemple les informations d'adressage, les ports source et destination, les drapeaux dans le cas des connexions TCP, etc.) ;
- au niveau application, deux paramètres génériques sont considérés : l'identificateur de l'utilisateur de l'application ainsi que l'état de l'application ;
- des informations temporelles sont également incluses afin de spécifier quand une règle doit être appliquée.

Les actions ont également une structure générique (notation BNF) :
Action ::= <ACTION> <ACTION LEVEL> <LOG LEVEL>

Une action se décompose en trois parties. La première indique si la communication décrite par les conditions doit être autorisée ou interdite. Le paramètre <ACTION LEVEL> correspond à la couche protocolaire dans laquelle doit être effectuée l'action. La dernière partie décrit l'importance accordée à l'événement de contrôle d'accès et permet la classification des résultats.

Le paragraphe suivant montre comment le langage ACPDL peut être utilisé afin d'exprimer un exemple de service de contrôle d'accès. Dans cet exemple, chaque équipement est identifié par son adresse source (IP_SRC_ADDRESS) et son adresse destination (IP_DST_ADDRESS). Le service WWW est identifié par les ports source (SRC_PORT) et destination (DST_PORT). La deuxième ligne de commande donnée dans l'exemple est utilisée afin d'interdire les demandes de connexion sur le port WWW d'une station interne.

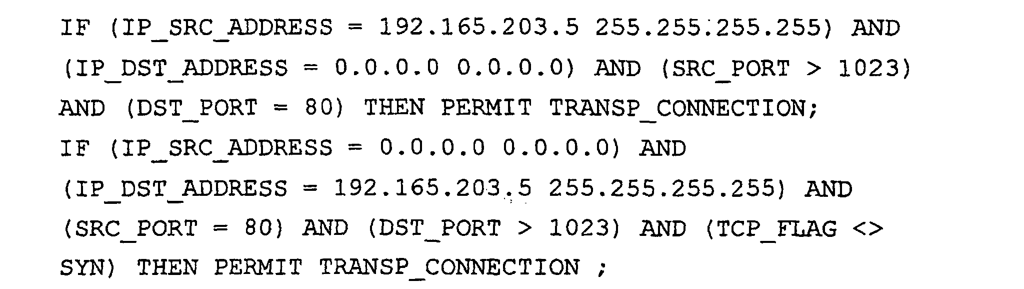

La politique de contrôle d'accès est définie par l'officier de sécurité au moyen d'une interface homme-machine (IHM) 6 de la station 1, en utilisant le langage ACPDL. Elle est utilisée pour configurer les deux parties du contrôleur. Cependant cette politique ne peut pas être utilisée directement par les deux outils de contrôle d'accès 4, 20/21. Le gestionnaire 7 est le module qui permet de résoudre ce problème en traduisant la politique de contrôle d'accès en commandes de configuration pour les deux outils.

Ce processus de traduction peut être divisé en deux parties principales. La première est la traduction de la politique en trois configurations statiques :

Au niveau de la signalisation ATM, cette configuration comprend une description des communications devant être contrôlées. Chaque communication est décrite par un ensemble d'éléments d'information (IE) et par une action (Autoriser ou Interdire). Cette configuration est envoyée à l'analyseur de signalisation 4.

Au niveau TCP/IP la configuration comprend une description des paquets devant être contrôlés. Cette partie de la politique peut être générique, ce qui signifie que les règles qui y sont décrites ne sont pas dédiées à une connexion ATM particulière. Cette partie peut aussi être rattachée à une connexion ATM par l'expression de conditions portant sur des identificateurs de connexion.

Au niveau cellule, la configuration comprend une description des cellules qui doivent être contrôlées. Ces cellules sont divisées selon les champs qu'elles peuvent contenir. L'ensemble des valeurs que chaque champ peut prendre est décrit par un arbre. Cette configuration est envoyée aux cartes IFT.

La seconde partie du processus de configuration a lieu lorsqu'une demande de connexion est reçue par l'analyseur de signalisation 4. Une fois que le processus de contrôle d'accès a été réalisé, l'analyseur de signalisation 4 envoie au gestionnaire 7 les informations nécessaires pour effectuer la configuration dynamique des cartes IFT 20, 21. Cette configuration dynamique est importante car elle permet de diminuer la taille des informations de configuration stockées dans la mémoire des cartes IFT 5 en comparaison avec une configuration statique. Ceci est important car le délai introduit par les cartes IFT au cours du processus d'analyse dépend de cette taille. Les information fournies par l'analyseur de signalisation 4 comprennent :
- les identificateurs de connexion VPI et VCI (« Virtual Path Identifier », « Virtual Channel Identifier ») ;
- les adresses ATM source et destination ;
- un descripteur de service (Classical IP over ATM (CLIP), Applications natives ATM). Quand une couche additionnelle est utilisée au dessus du modèle ATM, l'analyseur de signalisation 4 fournit également l'encapsulation (avec ou sans entête SNAP /LLC) ;
- la direction de la communication.

Dans un environnement CLIP, le gestionnaire 7 utilise les adresses ATM source et destination afin de trouver les adresses IP correspondantes. Cette traduction est effectuée au moyen d'un fichier décrivant les correspondances entre adresses IP et ATM. Elle peut aussi utiliser un serveur de résolution d'adresse (ATMARP).

Le gestionnaire 7 essaie ensuite de trouver une correspondance entre les adresses IP et les règles génériques de contrôle d'accès de niveau TCP/IP. Le sous-ensemble de règles obtenu est instancié avec les adresses IP et associé aux autres informations (adresses, encapsulation, identificateurs de connexion, direction). Cet ensemble d'informations est utilisé par le gestionnaire afin de construire l'arbre d'analyse qui sera utilisé pour configurer les cartes IFT, et est conservé durant toute la vie de la connexion. A la fermeture de connexion, le gestionnaire 7 reçoit un signal de l'analyseur de signalisation 4 afin de reconfigurer éventuellement les cartes IFT 20, 21 en effaçant les informations relatives à la connexion. Le gestionnaire détruit ensuite les informations associées à la connexion.

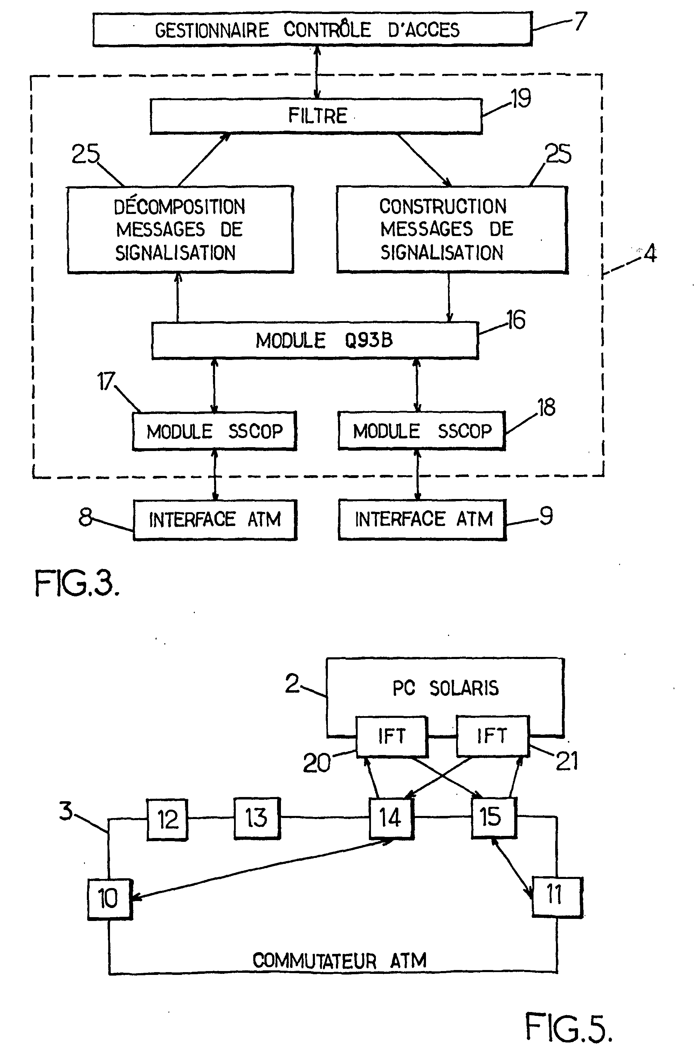

L'analyseur de signalisation 4 repose sur deux fonctions. La première est la redirection des messages de signalisation provenant des réseaux interne et externe vers un filtre appartenant à l'analyseur 4 (figure 3). La seconde est la capacité de décomposer les messages de signalisation suivant la spécification UNI 3.1 de l'ATM Forum (« ATM User-Network Interface Specification, Version 3.1 », ATM Forum, juillet 1994) et de transmettre ou de supprimer ces messages en fonction de la configuration de contrôle d'accès fournie par le gestionnaire 7.

La station 1 est pourvue de deux cartes d'interface ATM 8, 9 respectivement reliées à deux interfaces 12, 13 du commutateur 3 (figures 1, 2 et 5). Les autres interfaces représentées du commutateur 3 sont notées 10 (réseau interne), 11 (réseau externe), 14 et 15 (cartes IFT 20 et 21).

Afin de rediriger la signalisation, le commutateur ATM 3 est configuré afin de diriger les messages de signalisation vers la station 1 comme indiqué sur la figure 2. Cette configuration peut être réalisée en désactivant le protocole de signalisation sur les interfaces 10, 11, 12 et 13. Un canal virtuel (VC) doit être ensuite construit entre chaque paire d'interfaces pour chaque canal de signalisation. Les canaux de signalisation sont par exemple identifiés par un identifiant de canal virtuel (VCI) égal à 5.

Avec la configuration précédente, les messages de signalisation provenant du réseau externe sont dirigés vers l'interface 13 de la station 1 alors que les messages provenant du réseau interne sont dirigés vers l'interface 12. Comme indiqué sur la figure 3, tous les messages de signalisation sont multiplexés par un module 16 de type Q93B appartenant à l'analyseur de signalisation 4 et qui communique avec les interfaces ATM 8 et 9 à travers des modules respectifs 17, 18 mettant en oeuvre les protocoles de fiabilisation SSCOP. La fonction du module Q93B est, de façon connue, d'établir, de contrôler et de fermer les connexions ATM. Afin d'éviter le rejet des messages de signalisation par le module Q93B, celui-ci doit être modifié afin de passer les messages à un filtre 19 au niveau application sans les analyser. Afin de différencier le filtrage réalisé sur les messages venant de l'extérieur de celui réalisé sur les messages venant de l'intérieur, les messages sont associés à leur interface ATM d'origine. Cette information est fournie au filtre applicatif 19 par le module Q93B 16.

Lorsque des messages de signalisation sont reçus par l'analyseur de signalisation 4, ceux-ci sont décomposés par un module de décomposition de messages 24 en éléments d'information suivant la spécification UNI 3.1. Les éléments d'information sont ensuite décomposés en informations élémentaires telles que les adresses, les identificateurs de connexion, la référence d'appel, les descripteurs de qualité de service et les identificateurs de service. L'analyseur 4 cherche ensuite si le message peut être associé à une connexion existante au moyen du type du message et de la référence d'appel. Si la connexion est nouvelle, un descripteur de connexion contenant ces informations est construit. Quand la connexion existe déjà, le descripteur de connexion est mis à jour. Le descripteur de connexion est associé à l'état de la connexion et à l'interface d'origine. Il est identifié par un identificateur de connexion. Le descripteur est ensuite envoyé au filtre 19 afin d'être analysé.

Lorsque le filtre 19 reçoit un descripteur de connexion, il compare les paramètres décrivant la connexion avec l'ensemble des communications décrit par la politique de contrôle d'accès. Si une correspondance est trouvée, le filtre 19 applique l'action associée à la communication. Dans le cas contraire, il applique l'action par défaut qui est d'interdire la connexion. Lorsque l'action consiste en une interdiction, le filtre 19 détruit le descripteur de connexion. Dans le cas contraire, il envoie le descripteur de connexion au module de construction des messages 25. Lorsque le descripteur de connexion indique qu'un message CONNECT a été reçu, un sous ensemble des paramètres du descripteur de connexion est envoyé au gestionnaire 7 comme indiqué ci-dessus :
- les identificateurs de connexion VPI / VCI, obtenus à partir de l'IE « Connection Identifier » ;
- les adresses ATM source et destination, fournies par les IE « Called Party Identifier» et « Calling Party Identifier» ;
- les descripteurs de service, obtenus à partir des IE « Broadband Higher Layer Identifier (BHLI) » et « Broadband Lower Layer Identifier (BLLI) » ;
- la direction, fournie par le nom de l'interface associée au descripteur de connexion.

Lorsque le descripteur de connexion indique la réception d'un message RELEASE_COMPLETE, qui achève la libération d'une connexion, le descripteur de connexion est de nouveau envoyé au gestionnaire 7. Les communications entre le gestionnaire 7 et le filtre de signalisation 19 peuvent se faire de façon classique au moyen d'un segment de mémoire partagé et de signaux.

Une autre fonctionnalité fournie par le filtre 19 est sa capacité à modifier l'adresse ATM source lorsqu'une communication provient du réseau ATM interne, afin de cacher la structure topologique interne de ce réseau. Cette fonctionnalité est réalisée en remplaçant l'adresse ATM source par l'adresse de l'interface ATM externe de la station, à savoir l'interface 13.

Lorsque le module de construction de messages 25 reçoit un descripteur de connexion, il construit un nouveau message de signalisation à partir des informations contenues dans le descripteur. Le message est ensuite associé à une interface de sortie et envoyé au module Q93B 16. Lorsque l'état associé à la connexion indique qu'un message RELEASE_COMPLETE a été reçu pour libérer la connexion, le module 16 libère les ressources associées au descripteur de connexion.

Le délai introduit par le processus d'analyse de la signalisation n'a pas d'impact sur le déroulement normal de la connexion car les délais normalisés sont extrêmement larges (par exemple 14 secondes entre les messages SETUP et CONNECT).

Les cartes IFT considérées ici pour la mise en oeuvre de l'invention sont du type décrit dans la demande de brevet européen n° 00400366.1 déposée le 9 février 2000 par la demanderesse. Ces cartes ont été conçues à l'origine pour un module de routage à haut débit (voir aussi EP-A-0 989 502). Ces cartes possèdent des caractéristiques intéressantes qui font qu'elles sont bien adaptées au dispositif selon l'invention.
- elles permettent l'analyse de la première cellule de chaque trame AAL5 (« ATM Adaptation Layer n° 5 ») et la modification des cellules correspondantes en fonction de l'analyse ;
- elles peuvent fonctionner à la vitesse de 622 Mbit/s grâce à un procédé rapide et flexible d'analyse des cellules ;
- le délai introduit par l'analyse peut être borné et dépend de la configuration de la carte ;
- elles peuvent être configurées dynamiquement sans interrompre le processus d'analyse ;
- elles sont intégrables dans des équipements de type PC sous Solaris.

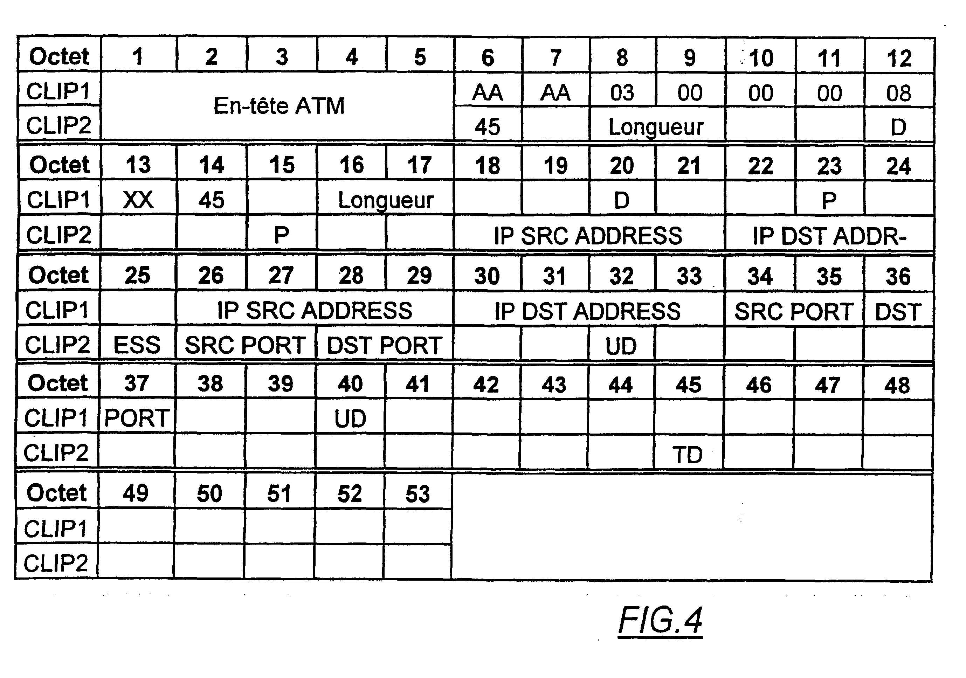

La figure 4 décrit les informations pouvant être analysées par les cartes IFT 20, 21 dans le cas des protocoles CLIP (CLIP1) et CLIP sans encapsulation SNAP-LLC (CLIP2). Les champs UD et TD indiquent le début des segments de données pour les protocoles UDP et TCP, respectivement. Ceci signifie que, dans le cas général, les cartes IFT ont accès aux informations de niveau ATM, IP, TCP, UDP et dans certains cas de niveau application. Il faut cependant noter que les champs optionnels pouvant se trouver dans le paquet IP ne sont pas représentés. La présence de ces champs (de longueur variable) peut repousser les informations de niveau TCP ou UDP dans la seconde cellule ATM.

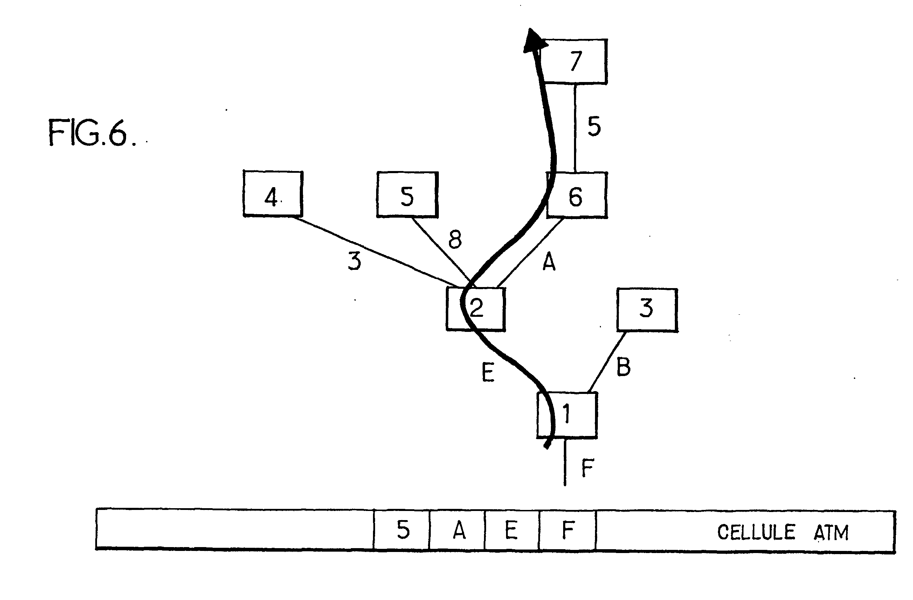

Comme dans le cas de la signalisation, la première partie du processus de contrôle d'accès au niveau cellule consiste à rediriger le trafic provenant des réseaux interne et externe vers les cartes IFT 20, 21. Cependant, dans ce cas, la configuration doit préserver la configuration réalisée pour le contrôle de la signalisation. A titre d'exemple, les canaux virtuels identifiés par une valeur de VCI égal à 31 sont volontairement laissés libres afin de permettre au commutateur ATM 3 de rejeter les cellules appartenant à une communication qui doit être interdite. Le commutateur ATM 3 est alors configuré afin de créer un canal virtuel pour chaque valeur de VCI différente de 5 et de 31 entre chaque paire d'interface (10, 14) et (11, 15), comme illustré par la figure 5.

Les cartes IFT considérées ne permettent que l'analyse de flux unidirectionnels. Ceci signifie que les flux provenant des réseaux interne et externe doivent être séparés. Cette opération est particulièrement simple dans le cas d'une couche physique de type Mono Mode Fiber utilisé par les cartes puisque les fibres d'émission et de réception sont physiquement séparées. La figure 5 montre comment les fibres de réception et d'émission doivent être connectées entre les cartes IFT et les accès 14, 15 du commutateur 3.

La seconde partie du processus de contrôle d'accès est la configuration des cartes IFT 20, 21 afin qu'elles fournissent le service de contrôle d'accès désiré. Comme indiqué précédemment, cette configuration est faite par le gestionnaire 7. Les cartes IFT ont été conçues à l'origine pour être gérées à distance par plusieurs gestionnaires. Un logiciel approprié 27 (démon RPC) est alors utilisé dans la station 2 pour sérialiser les demandes adressées au circuit de commande 28 (driver) des cartes 20, 21. Du côté du gestionnaire 7, une librairie donne accès aux fonctions de configuration. Cette librairie traduit les appels locaux en appels à distance sur la station 2. Les communications entre les deux équipements se font par exemple au travers d'un réseau dédié de type Ethernet.

La configuration des cartes 20, 21 se base sur une description des communications à contrôler sous forme d'arbres. Chaque branche de l'arbre décrit la valeur codée d'une chaîne binaire, par exemple de 4 bits, qui peut être trouvée pendant le processus d'analyse. Ce processus consiste à parcourir la portion de cellule à analyser par tranches de 4 bits servant à accéder au contenu d'une mémoire associative de type TRIE incluse dans chaque carte IFT. Un arbre d'analyse, construit à partir d'une instruction de contrôle d'accès fournie par le gestionnaire 7, correspond à un enchaînement donné de tranches de 4 bits trouvées à des emplacements déterminés en parcourant la cellule. La racine de l'arbre correspondant à un portier qui doit être reconnu afin de commencer l'analyse de l'arbre. Un exemple d'analyse est montré schématiquement sur la figure 6. Des informations complémentaires peuvent être associées à un noeud afin de permettre le saut d'un arbre à l'autre ou l'interruption de l'analyse permettant la modification des identificateurs de connexion. Pour plus de détails sur le fonctionnement et la configuration des cartes IFT, on pourra se reporter à la demande de brevet européen n° 00400366.1 précitée.

Les fonctions de configuration permettent au gestionnaire 7 de construire, de mettre à jour et de supprimer ces arbres pendant que les cartes IFT 20, 21 fonctionnent. La traduction entre les informations fournies par le processus de génération dynamique de la politique de contrôle d'accès de niveau cellule peut se faire la manière suivante :
- chaque champ possible est codé par un arbre. Les valeurs décrites par la politique de contrôle d'accès sont ensuite découpées en mots de 4 bits et attribuées aux branches de l'arbre. Les intervalles décrits par plusieurs conditions sur un même champ sont codées en générant une branche pour chaque valeur possible dans l'intervalle ;
- le ET logique entre deux conditions sur deux champs différents est codé comme un saut d'un arbre à un autre.

L'action de rejet ou d'acceptation (« DENY » ou « ALLOW ») est codée au moyen d'un noeud particulier provoquant la fin de l'analyse et renvoyant l'identificateur de connexion qui sera attribué à toutes les cellules de la trame AAL 5 correspondante. L'action « DENY » est codée en dirigeant la trame vers le canal non configuré (VCI 31) au niveau du commutateur 3. Le VCI 31 est ainsi utilisé comme VCI poubelle pour jeter toutes les cellules ATM non conformes à la politique de sécurité. L'action « ALLOW » est codée en laissant l'identificateur de connexion inchangé.

Le dispositif ci-dessus constitue un firewall ATM qui peut être construit à partir de composants existants. Il a la capacité de fournir un service de contrôle d'accès aux niveaux ATM, IP et transport, voire application, et peut atteindre la vitesse de 622 Mbit/s sur un prototype qui a été réalisé.

Du fait notamment du délai borné du processus de contrôle d'accès au niveau cellule, la structure du dispositif évite les modifications de QoS qui sont courantes avec les firewalls classiques. Le dispositif présente en outre les avantages d'avoir un bon niveau de contrôle d'accès au niveau ATM et une vitesse d'analyse au niveau cellule compatible avec le débit du canal.

Pour enrichir les capacités de contrôle d'accès au niveau application, le gestionnaire 7 peut programmer les cartes IFT afin de diriger les flux produits par les applications sans requête de qualité de service vers un firewall classique qui analyse ces flux de manière approfondie, en réassemblant puis en resegmentant les paquets IP. Dans ce cas, le filtre 19 de l'analyseur de signalisation 4 est modifié afin de fournir une indication de requête de qualité de service au gestionnaire 7 en même temps que les informations indiquées précédemment. Le gestionnaire 7 désigne ainsi aux cartes IFT 20, 21 les connexions établies sans engagement de QoS, pour que les cellules correspondantes soient transférées au firewall extérieur et traitées selon la politique de contrôle d'accès désirée.

Cette même solution est utilisable pour traiter le problème des paquets IP possédant des options.

L'invention a été décrite ci-dessus dans son application préférée à des réseaux ATM supportant des réseaux IP. On notera toutefois que le gestionnaire 7 et le filtre 19 peuvent être modifiés afin de fournir des capacités de contrôle d'accès pour d'autre types d'utilisation des réseaux ATM, comme par exemple l'émulation de LAN, MPOA, ou relais de trame sur ATM, et de façon générale dans tout réseau utilisant un canal de signalisation, comme relais de trame, X.25, ou même Intserv (qui utilise RSVP pour a signalisation), sans pour autant être basé sur ATM en couche inférieure.

## Revendications

1. Dispositif de contrôle d'accès entre des réseaux ATM, comprenant des moyens d'analyse de signalisation (4) et des moyens d'analyse de trafic (20, 21) reliés à un commutateur ATM (3) configuré pour faire transiter par les moyens d'analyse de signalisation des messages de signalisation ATM échangés entre des réseaux ATM interne et externe, et pour faire transiter par les moyens d'analyse de trafic des cellules ATM porteuses de trafic échangées entre les réseaux interne et externe dans le cadre de connexions ATM établies au moyen desdits messages de signalisation ATM, le dispositif comprenant en outre des moyens de gestion de contrôle d'accès (7) pour configurer dynamiquement les moyens d'analyse de trafic (20, 21) en fonction d'une politique de contrôle d'accès et d'informations recueillies par les moyens d'analyse de signalisation (4) de façon que les moyens d'analyse de trafic filtrent chaque cellule ATM conformément à la politique de contrôle d'accès.

2. Dispositif selon la revendication 1, dans lequel les moyens de gestion de contrôle d'accès (7) coopèrent avec les moyens d'analyse de signalisation (4) de façon à autoriser ou interdire l'établissement de connexions ATM conformément à la politique de contrôle d'accès.

3. Dispositif selon la revendication 1 ou 2, dans lequel les moyens d'analyse de signalisation (4) sont agencés pour modifier l'adresse ATM source indiquée dans chaque message de requête de connexion issu du réseau ATM interne avant de retransmettre ledit message vers le réseau externe.

4. Dispositif selon la revendication 3, dans lequel les moyens d'analyse de signalisation (4) sont agencés pour remplacer l'adresse ATM source indiquée dans chaque message de requête de connexion issu du réseau ATM interne par une adresse ATM affectée aux moyens d'analyse de signalisation.

5. Dispositif selon l'une quelconque des revendications 1 à 4, dans lequel les moyens de gestion de contrôle d'accès (7) sont agencés pour commander aux moyens d'analyse de trafic (20, 21) de supprimer des éléments pris en compte dans l'analyse de cellules échangées dans le cadre d'une connexion ATM en réponse à la détection, par les moyens d'analyse de signalisation (4), de la libération de ladite connexion ATM.

6. Dispositif selon l'une quelconque des revendications 1 à 5, dans lequel certains au moins des filtrages de cellules ATM effectués par les moyens d'analyse de trafic (20, 21) sont conditionnés par des éléments définis par les moyens de gestion de contrôle d'accès (7), comprenant des éléments inclus dans les en-têtes ATM des cellules.

7. Dispositif selon la revendication 6, dans lequel les éléments définis par les moyens de gestion de contrôle d'accès (7) pour conditionner certains au moins des filtrages effectués par les moyens d'analyse de trafic (20, 21) comprennent en outre des éléments inclus dans les en-têtes de paquets portés par lesdites cellules.

8. Dispositif selon la revendication 7, dans lequel les éléments définis par les moyens de gestion de contrôle d'accès (7) pour conditionner certains au moins des filtrages effectués par les moyens d'analyse de trafic (20, 21) comprennent en outre des éléments relevant d'un protocole de transport associé aux paquets.

9. Dispositif selon la revendication 8, dans lequel lesdits paquets sont des paquets IP et ledit protocole de transport est TCP et/ou UDP.

10. Dispositif selon l'une quelconque des revendications 7 à 9, dans lequel les éléments définis par les moyens de gestion de contrôle d'accès (7) pour conditionner certains au moins des filtrages effectués par les moyens d'analyse de trafic (20, 21) comprennent en outre des éléments inclus dans des en-têtes d'unités de données de protocoles de couche application transportées dans les paquets.

11. Dispositif selon l'une quelconque des revendications 1 à 10, dans lequel les moyens de gestion de contrôle d'accès (7) sont agencés pour commander les moyens d'analyse de signalisation (4) et/ou les moyens d'analyse de trafic (20, 21) pour appliquer une politique de contrôle d'accès fournie selon un langage unifié pour des opérations de contrôle d'accès effectuées à différents niveaux de protocole mis en oeuvre dans lesdits réseaux ATM.

12. Dispositif selon l'une quelconque des revendications 1 à 11, dans lequel les moyens d'analyse de trafic (20, 21) sont agencés pour transférer à un dispositif pare-feu des cellules ATM relevant de connexions ATM désignées par les moyens de gestion de contrôle d'accès (7).

13. Dispositif selon l'une quelconque des revendications 1 à 12, dans lequel les moyens d'analyse de trafic comprennent au moins un analyseur de trafic (20) pour les cellules allant du réseau interne vers le réseau externe et au moins un analyseur de trafic (21) pour les cellules allant du réseau externe vers le réseau interne.

14. Dispositif selon l'une quelconque des revendications 1 à 13, dans lequel les moyens de gestion de contrôle d'accès (7) configurent les moyens d'analyse de trafic (20, 21) en leur fournissant des arbres d'analyse correspondant à des valeurs de chaînes binaires pouvant apparaître à des emplacements déterminés dans des cellules ATM reçues du commutateur ATM (3), les moyens d'analyse de trafic (20, 21) étant agencés pour détecter les chaînes binaires ayant lesdites valeurs et, en réponse à cette détection pour chaque valeur d'un arbre d'analyse, accomplir une action de contrôle d'accès spécifiée dans la politique de contrôle d'accès ou poursuivre l'analyse selon un arbre suivant.

15. Dispositif selon la revendication 14, dans lequel les moyens d'analyse de trafic (20, 21) comprennent au moins une mémoire associative de type TRIE pour effectuer des analyses selon un ensemble d'arbres défini dynamiquement par les moyens de gestion de contrôle d'accès (7).

## Patentansprüche

1. Vorrichtung zur Zugangsüberwachung zwischen ATM-Netzwerken, umfassend Signalisierungsanalysemittel (4) und Verkehrsanalysemittel (20, 21), welche mit einem ATM-Verteiler (3) verbunden sind, der dazu eingerichtet ist, zwischen internen und externen ATM-Netzwerken ausgetauschte ATM-Signalisierungsmeldungen durch die Signalisierungsanalysemittel durchlaufen zu lassen und zwischen internen und externen Netzwerken im Rahmen von mittels der ATM-Signalisierungsmeldungen aufgebauten ATM-Verbindungen ausgetauschte ATM-Verkehrsträgerzellen durch die Verkehrsanalysemittel durchlaufen zu lassen, wobei die Vorrichtung ferner Zugangsüberwachungsverwaltungsmittel (7) aufweist, um in Funktion einer Zugangsüberwachungsverfahrensweise und von durch die Signalisierungsanalysemittel (4) erhaltenen Informationen die Verkehrsanalysemittel (20, 21) dynamisch zu konfigurieren, und zwar derart, dass die Verkehrsanalysemittel jede ATM-Zelle entsprechend der Zugangsüberwachungsverfahrensweise filtern

2. Vorrichtung nach Anspruch 1, bei der die Zugangsüberwachungsverwaltungsmittel (7) mit den Signalisierungsanalysemitteln (4) derart zusammenarbeiten, dass sie den Aufbau von ATM-Verbindungen entsprechend der Zugangsüberwachungsverfahrensweise zulassen oder verbieten.

3. Vorrichtung nach Anspruch 1 oder 2, bei der die Signalisierungsanalysemittel (4) dazu eingerichtet sind, die in jeder vom internen ATM-Netzwerk ausgegebenen Verbindungsanfragemeldung angegebene ATM-Quelladresse zu modifizieren, bevor die Meldung zum externen Netzwerk zurück übertragen wird.

4. Vorrichtung nach Anspruch 3, bei der die Signalisierungsanalysemittel (4) dazu eingerichtet sind, die in jeder vom internen ATM-Netzwerk ausgegebenen Verbindungsanfragemeldung angegebene ATM-Quelladresse zu ersetzen, durch eine ATM-Adresse, welche von den Signalisierungsanalysemitteln zugewiesen wurde.

5. Vorrichtung nach einem der Ansprüche 1 bis 4, bei der die Zugangsüberwachungsverwaltungsmittel (7) dazu eingerichtet sind, die Verkehrsanalysemitteln (20, 21) zu steuern, Elemente zu unterdrücken, welche im Rahmen einer ATM-Verbindung bei der Analyse der ausgetauschten Zellen berücksichtigt wurden, und zwar in Antwort auf die durch die Signalisierungsanalysemittel (4) erfasste Freigabe der ATM-Verbindung.

6. Vorrichtung nach einem der Ansprüche 1 bis 5, bei der wenigstens bestimmte durch die Verkehrsanalysemittel (20, 21) ausgeführte Filterungen von ATM-Zellen durch definierte Elemente durch die Zugangsüberwachungsverwaltungsmittel (7) geprüft sind, umfassend in den ATM-Header der Zellen enthaltene Elemente.

7. Vorrichtung nach Anspruch 6, bei der die durch die Zugangsüberwachungsverwaltungsmittel (7) definierten Elemente zum Konditionieren wenigstens bestimmter durch die Verkehrsanalysemittel (20, 21) ausgeführten Filterungen ferner Elemente umfassen, welche in den Headem von durch die Zellen getragenen Paketen enthalten sind.

8. Vorrichtung nach Anspruch 7, bei der die durch die Zugangsüberwachungsverwaltungsmittel (7) definierten Elemente zum Konditionieren wenigstens bestimmter durch die Verkehrsanalysemittel (20, 21) ausgeführten Filterungen ferner Elemente umfassen, welche einem den Paketen zugeordneten Transportprotokoll unterliegen.

9. Vorrichtung nach Anspruch 8, bei der die Pakete IP-Pakete sind und das Transportprotokoll TCP und/oder UDP ist.

10. Vorrichtung nach einem der Ansprüche 7 bis 9, bei der die durch die Zugangsüberwachungsverwaltungsmittel (7) definierten Elemente zum Konditionieren wenigstens bestimmter durch die Verkehrsanalysemittel (20, 21) ausgeführten Filterungen ferner Elemente umfassen, welche in den Headem von Dateneinheiten von in den Paketen transportierten Applikationsschicht-Protokollen enthalten sind.

11. Vorrichtung nach einem der Ansprüche 1 bis 10, bei der die Zugangsüberwachungsverwaltungsmittel (7) dazu eingerichtet sind, die Signalisierungsanalysemittel (4) und/oder die Verkehrsanalysemittel (20, 21) zu steuern, um eine Zugansüberwachungsverfahrensweise anzuwenden, welche gemäß einer einheitlichen Sprache bereitgestellt wird für auf unterschiedlichen, in den ATM-Netzwerken umgesetzten Protokollebenen ausgeführte Zugangsüberwachungsfunktionen.

12. Vorrichtung nach einem der Ansprüche 1 bis 11, bei der die Verkehrsanalysemittel (20, 21) dazu eingerichtet sind, einer Firewall-Vorrichtung ATM-Zellen zu übermitteln, welche durch die Zugangsüberwachungsverwaltungsmittel (7) bezeichneten ATM-Verbindungen unterliegen.

13. Vorrichtung nach einer dem Ansprüche 1 bis 12, bei der die Verkehrsanalysemittel wenigstens einen Verkehrsanalysator (20) für die vom internen zum externen Netzwerk gehenden Zellen und wenigstens einen Verkehrsanalysator (21) für die vom externen zum internen Netzwerk gehenden Zellen aufweisen.

14. Vorrichtung nach einem der Ansprüche 1 bis 13, bei der die Zugangsüberwachungsverwaltungsmittel (7) die Verkehrsanalysemittel (20, 21) konfiguneren, in dem sie ihnen Analysebäume bereitstellen, welche Werten von Binärketten entsprechen, die an bestimmten Stellen in den vom ATM-Verteiler (3) empfangenen ATM-Zellen auftreten können, wobei die Verkehrsanalysemittel (20, 21) dazu eingerichtet sind, die Binärketten zu erfassen, welche die Werte aufweisen, und in Antwort auf diese Erfassung für jeden Wert eines Analysebaums eine in der Zugangsüberwachungsverfahrensweise spezifizierte Überwachungsaktion zu erfüllen oder die Analyse entlang eines nachfolgenden Baumes zu verfolgen.

15. Vorrichtung nach Anspruch 14, bei der die Verkehrsanalysemittel (20, 21) wenigstens einen Assoziativspeicher vom Typ TRIE umfassen, um die Analysen entlang einer Gruppe von Bäumen auszuführen, welche durch die Zugangsüberwachungsverwaltungmittel (7) dynamisch definiert sind.

## Claims

1. A device for access control between ATM networks, comprising signaling analysis means (4) and traffic analysis means (20, 21) connected to an ATM switch (3) configured so as to steer via the signaling analysis means, ATM signaling messages exchanged between internal and external ATM networks, and so as to steer via the traffic analysis means, traffic-bearing ATM cells exchanged between the internal and external networks within the framework of ATM connections established by means of said ATM signaling messages, the device furthermore comprising access control management means (7) for dynamically configuring the traffic analysis means (20, 21) as a function of an access control policy and of information gathered by the signaling analysis means (4) in such a way that the traffic analysis means filter each ATM cell in accordance with the access control policy.

2. The device as claimed in claim 1, wherein the access control management means (7) cooperate with the signaling analysis means (4) in such a way as to permit or disallow the establishment of ATM connections in accordance with the access control policy.

3. The device as claimed in claim 1 or 2, wherein the signaling analysis means (4) are arranged so as to modify the source ATM address indicated in each connection request message emanating from the internal ATM network before forwarding said message to the external network.

4. The device as claimed in claim 3, wherein the signaling analysis means (4) are arranged so as to replace the source ATM address indicated in each connection request message emanating from the internal ATM network with an ATM address assigned to the signaling analysis means.

5. The device as claimed in any one of claims 1 to 4, wherein the access control management means (7) are arranged so as to order the traffic analysis means (20, 21) to eliminate elements taken into account in the analysis of cells exchanged within the framework of an ATM connection in response to the detection, by the signaling analysis means (4), of the releasing of said ATM connection.

6. The device as claimed in any one of claims 1 to 5, wherein at least some of the ATM cell filterings performed by the traffic analysis means (20, 21) are conditioned by elements defined by the access control management means (7), comprising elements included within the ATM headers of the cells.

7. The device as claimed in claim 6, wherein the elements defined by the access control management means (7) for conditioning at least some of the filterings performed by the traffic analysis means (20, 21) furthermore comprise elements included within the headers of packets carried by said cells.

8. The device as claimed in claim 7, wherein the elements defined by the access control management means (7) for conditioning at least some of the filterings performed by the traffic analysis means (20, 21) furthermore comprise elements pertaining to a transport protocol associated with the packets.

9. The device as claimed in claim 8, wherein said packets are IP packets and said transport protocol is TCP and/or UDP.

10. The device as claimed in any one of claims 7 to 9, wherein the elements defined by the access control management means (7) for conditioning at least some of the filterings performed by the traffic analysis means (20, 21) furthermore comprise elements included within headers of units of application layer protocol data transported in the packets.

11. The device as claimed in any one of claims 1 to 10, wherein the access control management means (7) are arranged so as to control the signaling analysis means (4) and/or the traffic analysis means (20, 21) for applying an access control policy provided according to a unified language for access control operations performed at various protocol levels implemented in said ATM networks.

12. The device as claimed in any one of claims 1 to 11, wherein the traffic analysis means (20, 21) are arranged so as to transfer to a firewall device ATM cells pertaining to ATM connections designated by the access control management means (7).

13. The device as claimed in any one of claims 1 to 12, wherein the traffic analysis means comprise at least one traffic analyzer (20) for the cells going from the internal network to the external network and at least one traffic analyser (21) for the cells going from the external network to the internal network.

14. The device as claimed in any one of claims 1 to 13, wherein the access control management means (7) configure the traffic analysis means (20, 21) by providing them with analysis trees corresponding to values of binary strings which may appear at specified locations in ATM cells received from the ATM switch (3), the traffic analysis means (20, 21) being arranged for detecting the binary strings having said values and, in response to this detection for each value of an analysis tree, for performing an access control action specified in the access control policy or to pursue the analysis according to a next tree.

15. The device as claimed in claim 14, wherein the traffic analysis means (20, 21) comprise at least one associative memory of TRIE type for performing analyses according to a set of trees which is defined dynamically by the access control management means (7).
